# EUROPÄISCHE PATENTSCHRIFT

(11) **EP 0 370 371 B1**
(45) Veröffentlichungstag und Bekanntmachung des Hinweises auf die Patenterteilung: **16.02.1994**
(21) Anmeldenummer: 89121116.1
(22) Anmeldetag: 15.11.1989
(51) Int. Cl.: B27K 3/50

(54) **Holzschutzmittel**
Wood preservative
Agent préservatif du bois

(30) Priorität: 24.11.1988 DE 3839640
(43) Veröffentlichungstag der Anmeldung: 30.05.1990
(73) Patentinhaber: Dr. Wolman GmbH, D-76547 Sinzheim (DE)
(72) Erfinder: Goettsche, Reimer, Dr., D-7570 Baden-Baden 19 (DE)
(74) Vertreter: Schweiss, Werner, Dr.

(56) Entgegenhaltungen:
- EP-A- 0 147 976
- EP-A- 0 193 890
- EP-A- 0 223 095
- EP-A- 0 234 462
- EP-A- 0 277 556
- EP-A- 0 316 602

## Beschreibung

Die vorliegende Erfindung betrifft wasserlösliche Holzschutzmittel für den Schutz von Holz, insbesondere von frischem Holz, z.B. frisch geschnittenem Schnittholz im Sägewerk oder frisch gefälltem Stammholz im Wald.

Es ist bekannt, Dimethylalkylamine, 4-(3-(p-tert.-Butylphenyl)-2-methyl-propyl)-2,6-cis dimethylmorpholin (Fenpropemorph) oder N-Tridecyl-2,6-di-methylmorpholin (Tridemorph), z.B. in Form ihrer Salze für den Holzschutz zu verwenden (DE 36 13 254.3 und DE 35 07 420.5).

Es wurde gefunden, daß Holzschutzmittel, die
a) ein Dimethylalkylamin, N-Tridecyl-2,6-dimethylmorpholin, 4-(3-(para-tertiär-Butyl-phenyl)-2-methyl-propyl)-2,6-cis-Dimethylmorpholin oder ihre Mischung,
b) eine quaternäre Ammoniumverbindung, ein Fettaminsalz oder ein ethoxyliertes Amin und
c) eine aliphatische C₅-C₂₀-Carbonsäure, N-Cyclohexyldiazoniumdioxid, Benzoesäure oder eine Dicarbonäusre oder ihr Salz
enthalten, eine sehr gute Wirkung gegen Holzschädlinge, insbesondere gegen Pilze haben, die besser ist als die Wirkung der bekannten Holzschutzmittel. Die neuen Holzschutzmittel sind wasserlöslich. Sie werden in Form wäßriger Imprägnierlösungen verwendet, die durch Verdünnen mit Wasser aus den Holzschutzmitteln (Konzentraten) hergestellt werden. Die vorliegende Erfindung umfaßt sowohl die Konzentrate als auch die daraus durch Verdünnen mit Wasser erhältlichen verdünnten wäßrigen Lösungen (Imprägnierlösungen). Die neuen Holzschutzmittel eignen sich zum Schutz von Holz, insbesondere frischem Holz, wie es beispielsweise als frisch geschnittenes Holz im Sägewerk oder als frisch gefälltes Stammholz im Wald anfällt.

Ein Dimethylalkylamin ist ein N,N-Dimethyl-N-alkylamin, dessen Alkylrest beispielsweise 6 bis 20 C-Atome enthält. Bevorzugt werden Dimethylalkylamine mit 12 oder 14 C-Atomen im Alkylrest. Neben den reinen Dimethylalkylaminen können auch Mischungen, z.B. Mischungen aus Dimethyl-C₁₂-alkylamin und Dimethyl-C₁₄-alkylamin (Dimethylalkyl-(C₁₂/C₁₄-amin) verwendet werden.

Als Emulgatoren können ionische und nicht ionische Emulgatoren eingesetzt werden. Besonders eignen sich quaternäre Ammoniumverbindungen, Fettaminsalze (z.B. Cocosfettamin-, Oleylamin-, Stearylaminsalze), ethoxylierte Alkylamine (z.B. auf Basis Cocosfettamin, C₁₀-C₁₈-Alkylamin), N-Alkyl-1,3-diaminopropan.

Eine quaternäre Ammoniumverbindung ist z.B. eine Verbindung entsprechend der allgemeinen Formel (R¹R²R³R⁴N)⁺Z⁻, wobei
- R¹: einen Alkylrest mit 8 bis 20 Kohlenstoffatomen, insbesondere einen Alkylrest mit 12 bis 20 Kohlenstoffatomen oder einen Benzylrest bedeutet, der gegebenenfalls durch C₁- bis C₂₀-Alkyl oder Halogen substituiert ist.
- R²: C₁- bis C₆-Alkyl, C₃- bis C₉-Alkoxalkyl
- R³: C₁- bis C₆-Alkyl, C₃- bis C₄-Alkoxy
- R⁴: C₁- bis C₂₀-Alkyl
bedeuten oder je zwei der Reste R¹ bis R⁴ zusammen mit dem Stickstoffatom einen heterocyclischen Rest bilden, der 4 bis 5 C-Atome, 1 bis 2 N-Atome und eine, zwei oder drei Doppelbindungen enthält, wobei die Kohlenstoffatome gegebenenfalls durch C₁- bis C₄-Alkyl oder Halogen substituiert sind und Z einen Säurerest bedeutet.

Eine wasserunlösliche Säure ist z.B. eine aliphatische C₅-C₂₀-Carbonsäure, beispielsweise eine Monocarbonsäure, Hexansäure, Heptansäure, Octansäure, Nonansäure, Decansäure, 2-Ethylpentansäure, 2-Ethylhexansäure, 2-Ethylheptansäure, Isooctansäure, Isononansäure, Versaticsäuren (stark verzweigte Monocarbonsäuren) oder eine Dicarbonsäure, z.B. Decandicarbonsäure. Es eignet sich auch Benzoesäure oder das N-Cyclohexyldiazoniumdioxid (z.B. in Form seiner wasserlöslichen Salze). 2-Ethyl-hexansäure wird bevorzugt.

Die Säuren können auch in Form ihrer Salze, z.B. Dimethylalkylaminsalze verwendet werden. Ein wasserlösliches Salz des N-Cyclohexyldiazeniumdioxids ist z.B. das Kaliumsalz.

Die Holzschutzmittel sind wassermischbar, bilden mit Wasser klare Lösungen und besitzen in der üblichen Anwendungskonzentration (0,5 bis 10,0 Gew.%, berechnet auf das Konzentrat) einen pH-Wert von ca. 5,0 bis 8,0, insbesondere 6,0 bis 7,0.

Die Holzschutzmittel (Konzentrate) sind mehr oder weniger viskose Lösungen, deren Viskosität durch Zugabe von polaren Lösungsmitteln herabgesetzt werden kann. Als polare Lösungsmittel können z.B. Dimethylformamid, Diethylformamid, N-Methylpyrrolidon, Dimethylsulfoxid, Glykole, Polyglykole, Glykolether, Glykoletheracetate, Alkohole verwendet werden.

Die Konzentrate enthalten im allgemeinen (Gew.%)
5,0 bis 75,0 %, insbesondere 30 bis 50 % Dimethylalkylamin (C₆-C₂₀)
5,0 bis 75,0 %, insbesondere 15 bis 25 % Tridemorph oder Fenpropemorph
6,5 bis 50,0 %, insbesondere 10 bis 75 % Emulgatoren
2,5 bis 30,0 %, insbesondere 5 bis 25 % wasserunlösliche Säuren oder ihre Salze
0 bis 50,0 %, insbesondere 4 bis 30 % Lösungsmittel,
wobei die Summe jeweils 100 (Gew.%) ergibt. Zusätzlich kann Wasser enthalten sein, das z.B. in der handelsüblichen Form der Emulgatoren enthalten ist.

Zusätzlich können z.B. eingesetzt werden: Netzmittel, Korrosionsinhibitoren, Farbstoffe und ggf. Bindemittel.

Um die Wirkungsbreite der Holzschutzmittel zu verbessern, können zusätzlich organische Fungizide, wie z.B. Furmecyclox, Benodanil, 2-(Thiocyanomethylthio)benzothiazol, 3-Iodo-2-propynylcarbamat oder organische Insektizide, wie z.B. Chlorpyrifos, Permethrin, Lindan enthalten sein.

Bei Verwendung basisch wirkender Emulgatoren, beispielsweise ethoxilierte Alkylamine, lassen sich z.B. bis zu 25 % fungizide Säuren oder deren Salze, z.B. Borsäure, einarbeiten.

Die Anwendung zum Schutz des Holzes kann z.B. je nach Gefährdung des Holzes erfolgen:
a) durch Besprühen des Holzes mit der Lösung
b) durch Tauchen des Holzes in die Lösung
c) durch Tränkung des Holzes mit Hilfe von Druckunterschieden, z.B. Kesseldruck- oder Doppelvakuumtränkung
d) durch Streichen des Holzes.

Bei Holzfolgeprodukten, z.B. Holzschnitten, Zellstoffen sowie weiteren technischen Produkten oder auch Cellulose enthaltenden Materialien, die einem Pilzbefall zugänglich sind, z.B. Zwischenprodukte bei der Papierherstellung, verholzten Einjahrespflanzen (Bargasse, Raps) ist die Applikation den technischen Möglichkeiten anzupassen.

Die Wirksamkeit der Mittel im Bereich des Holzschutzes erstreckt sich beispielsweise auf:
a) Schimmelpilze (z.B. Aspergillus niger)
b) Moderäulepilze (z.B. Chaetomium globosum)
c) Bläuepilze (z.B. Pullularia pullulans)
d) holzzerstörende Basidiomyceten (z.B. Serpula lacrymans)
Die Holzschutzmittel haben eine sehr gute fungizide Wirkung, wie aus den folgenden Versuchen hervorgeht:
Für die Versuche wurden saftfrische, sägerauhe Kiefernsplinthölzer mit den Abmessungen von 200 x 50 x 15 mm verwendet, die bis zum Versuchsbeginn tiefgefroren waren.

Nach dem Auftauen (ca. 6 Stunden) wurden die Hölzer in die Lösungen ca. 10 sec getaucht, zum Abtropfen leicht schräg gestellt und nach einer Zwischenlagerung unter Dach von ca. 24 Stunden unter normalen Klimabedingungen auf dem Testgelände eingebaut. Mit den einzelnen Testlösungen wurden jeweils zehn Musterbretter in der oben beschriebenen Weise imprägniert. Kontrollhölzer ohne Imprägnierung wurden in reines Wasser getaucht.

Als Testgelände wurde eine Wiese ausgewählt, deren Rasen vor dem Auslegen der Testhölzer kurzgeschnitten wurden. Die Testhölzer wurden auf zwei Kunststoffschienen in einer Höhe von ca. 1 cm über dem Rasen ausgelegt.

Die der äußeren Bewitterung (Regen) ausgesetzten Testbretter wurden nach zwei Monaten (August/September) geprüft.

Die fungizide Wirksamkeit wurde aufgrund der aufgetretenen Verfärbung und Veränderungen der Holzoberfläche nach vier Kategorien klassifiziert:
- 0: kein Bewuchs
- +: leichter punktueller oberflächlicher Bewuchs
- ++: stärkerer punktueller Bewuchs
- +++: großflächig bis vollflächig bewachsen.

### Vergleichsbeispiel A

50,0 % Dimethylalkylamin (C₁₂/C₁₄-Alkyl)
17,5 % Milchsäure
20,0 % 1,2-Propylenglykol
12,5 % Wasser

| Anwendungskonzentration (Holzschutzmittel (Konzentrat) = 100% | Beschaffenheit der Testhölzer |
|---|---|
| 2,5 % | +++ |
| 5,0 % | +++ |

### Vergleichsbeispiel B

50 % Tridemorph
35 % Milchsäure
5 % H₂O
10 % 1,2-Propylenglykol
4 %ige Lösung trüb pH 3,5

| Anwendungskonzentration | Beschaffenheit der Testhölzer |
|---|---|
| 2 % | +++ |
| 4 % | +++ |

### Vergleichsbeispiel C

80 % Dimethylalkylbenzylammoniumchlorid (C₁₂ ca. 40 %, C₁₄ ca. 50 %, C₁₆ ca. 10 %)
20 % Wasser

| Anwendungskonzentration | Beschaffenheit der Testhölzer |
|---|---|
| 5,0 % | +++ |

### Vergleichsbeispiel D

50 % Dimethyldialkylammoniumchlorid (C₁₀ ca. 90 %)
50 % Wasser

| Anwendungskonzentration | Beschaffenheit der Testhölzer |
|---|---|
| 2 % | +++ |
| 4 % | ca. 50 % +++, ca. 50 % ++ |

### Beispiele erfindungsgemäß

### Beispiel 1

30 % Dimethylalkylamin (C₁₂/C₁₄)
20 % Tridemorph
25 % Ethoxyliertes Cocosfettamin (Dichte 0,96 g/cm³ bei 50°C)
25 % 2-Ethylhexansäure

| Testhölzer Nr. | Beschaffenheit der Testhölzer Anwendungskonzentration | |
|---|---|---|
| | 2 % | 4 % |
| 1 | ++ | + |
| 2 | + | 0 |
| 3 | + | 0 |
| 4 | + | 0 |
| 5 | 0 | 0 |
| 6 | + | 0 |
| 7 | ++ | 0 |
| 8 | 0 | 0 |
| 9 | 0 | 0 |
| 10 | ++ | 0 |

### Beispiel 2

30 % Dimethylalkylamin (C₁₂/C₁₄)
20 % Fenpropemorph
25 % Ethoxyliertes Cocosfettamin
25 % 2-Ethylhexansäure

| Testhölzer Nr. | Beschaffenheit der Testhölzer Anwendungskonzentration | |
|---|---|---|
| | 2 % | 4 % |
| 1 | + | + |
| 2 | + | 0 |
| 3 | 0 | 0 |
| 4 | 0 | 0 |
| 5 | ++ | 0 |
| 6 | + | 0 |
| 7 | 0 | 0 |
| 8 | 0 | 0 |
| 9 | + | 0 |
| 10 | + | 0 |

### Beispiel 3

29 % Dimethylalkylbenzylammoniumchlorid (C₁₂ ca. 40 %, C₁₄ ca. 50 %, C₁₆ ca. 10 %)
6 % H₂O
50 % Dimethylalkylamin (C₁₂/C₁₄)
20 % 2-Ethylhexansäure

| Testhölzer Nr. | Beschaffenheit der Testhölzer Anwendungskonzentration | |
|---|---|---|
| | 2 % | 4 % |
| 1 | + | 0 |
| 2 | ++ | + |
| 3 | + | + |
| 4 | + | + |
| 5 | + | 0 |
| 6 | ++ | 0 |
| 7 | 0 | + |
| 8 | 0 | + |
| 9 | + | 0 |
| 10 | + | 0 |

### Beispiel 4

24 % Dimethylalkylbenzylammoniumchlorid (C₁₂ ca. 40 %, C₁4 ca. 50 %, C₁₆ ca. 10 %)
6% H₂O
30 % Dimethylalkylamin (C₁₂/C₁₄)
20 % Tridemorph
20 % 2-Ethylhexansäure

| Testhölzer Nr. | Beschaffenheit der Testhölzer Anwendungskonzentration | |
|---|---|---|
| | 2 % | 4 % |
| 1 | 0 | 0 |
| 2 | + | 0 |
| 3 | + | 0 |
| 4 | + | 0 |
| 5 | + | 0 |
| 6 | 0 | 0 |
| 7 | + | 0 |
| 8 | + | + |
| 9 | + | 0 |
| 10 | 0 | 0 |

### Beispiel 5

30 % Dimethylalkylamin
20 % Tridemorph
20 % Benzoesäure
5 % 1,2-Propylenglykol
25 % Ethoxyliertes Cocosfettamin

| Testhölzer Nr. | Beschaffenheit der Testhölzer Anwendungskonzentration | |
|---|---|---|
| | 2 % | 4 % |
| 1 | + | + |
| 2 | ++ | + |
| 3 | + | + |
| 4 | ++ | 0 |
| 5 | + | 0 |
| 6 | 0 | 0 |
| 7 | 0 | 0 |
| 8 | 0 | + |
| 9 | + | 0 |
| 10 | 0 | 0 |

### Beispiel 6

25 % Dimethyldialkylammoniumchlorid (C₁₀ ca. 90 %)
20% Tridemorph
10 % 2-Ethylhexansäure
35 % Wasser

| Testhölzer Nr. | Beschaffenheit der Testhölzer Anwendungskonzentration | |
|---|---|---|
| | 2,5 % | 5,0 % |
| 1 | + | 0 |
| 2 | 0 | 0 |
| 3 | 0 | 0 |
| 4 | + | 0 |
| 5 | + | 0 |
| 6 | + | + |
| 7 | + | 0 |
| 8 | + | + |
| 9 | + | + |
| 10 | + | 0 |

### Beispiel 7

25 % Dimethyldialkylammoniumchlorid (C₁₀ ca. 90 %)
20 % Tridemorph
10 % Kaliumsalz des N-Cyclohexyldiazeniumdioxids
45 % Wasser

| Testhölzer Nr. | Beschaffenheit der Testhölzer Anwendungskonzentration | |
|---|---|---|
| | 2,5 % | 5,0 % |
| 1 | + | + |
| 2 | + | 0 |
| 3 | + | 0 |
| 4 | 0 | 0 |
| 5 | ++ | + |
| 6 | + | + |
| 7 | + | 0 |
| 8 | 0 | 0 |
| 9 | 0 | 0 |
| 10 | + | 0 |

## Patentansprüche

1. Holzschutzmittel auf der Basis eines Amins, dadurch gekennzeichnet, daß es
a) ein Dimethylalkylamin, N-Tridecy1-2,6-dimethylmorpholin, 4-(3-(para-tertiär-Butyl-phenyl)-2-methyl-propyl)-2,6-cis-Dimethylmorpholin oder ihre Mischung,
b) eine quaternäre Ammoniumverbindung, ein Fettaminsalz oder ein ethoxyliertes Amin und
c) eine aliphatische C₅-C₂₀-Carbonsäure, N-Cyclohexyldiazoniumdioxid, Benzoesäure oder eine Dicarbonsäure oder ihr Salz
enthält.

2. Holzschutzmittel nach Anspruch 1, dadurch gekennzeichnet, daß es Dimethylalkylamine mit 12 oder 14 C-Atomen im Alkylrest enthält.

3. Holzschutzmittel nach Anspruch 1, dadurch gekennzeichnet, daß es als Emulgator ein ethoxyliertes Alkylamin enthält.

4. Holzschutzmittel nach Anspruch 1, dadurch gekennzeichnet, daß es als Emulgator ein ethoxyliertes Cocosfettamin enthält.

5. Holzschutzmittel nach Anspruch 1, dadurch gekennzeichnet, daß es als wasserunlösliche Säure die 2-Ethyl-hexansäure enthält.

6. Verfahren zum Schutz von Holz gegen Pilze, dadurch gekennzeichnet, daß man das Holz mit einem Holzschutzmittel gemäß Anspruch 1 behandelt.

7. Imprägnierlösung zur Imprägnierung von Holz zum Schutz gegen Pilze, hergestellt durch Verdünnung eines Holzschutzmittels gemäß Anspruch 1 mit Wasser.

8. Verfahren zum Schutz von Holz gegen Pilze, dadurch gekennzeichnet, daß man das Holz mit einer wäßrigen Imprägnierlösung imprägniert, die durch Verdünnung eines Holzschutzmittels gemäß Anspruch 1 mit Wasser hergestellt worden ist.

## Claims

1. A wood preservative based on an amine, which contains
a) a dimethylalkylamine, N-tridecyl-2,6-dimethylmorpholine, 4-(3-(para-tert-butylphenyl)-2-methyl-propyl)-2,6-cis-dimethylmorpholine or a mixture thereof,
b) a quaternary ammonium compound, a fatty amine salt or an ethoxylated amine and
c) an aliphatic C₅-C₂₀-carboxylic acid, N-cyclohexyldiazonium dioxide, benzoic acid or a diacarboxylic acid or a salt thereof.

2. A wood preservative as claimed in claim 1, which contains a dimethylalkylamine where alkyl is of 12 to 14 carbon atoms.

3. A wood preservative as claimed in claim 1, which contains an ethoxylated alkylamine as an emulsifier.

4. A wood preservative as claimed in claim 1, which contains an ethoxylated coconut fatty amine as an emulsifier.

5. A wood preservative as claimed in claim 1, which contains 2-ethylhexanoic acid as a water-insoluble acid.

6. A method for protecting wood from fungi, wherein the wood is treated with a wood preservative as claimed in claim 1.

7. An impregnating solution for impregnating wood for protection from fungi, prepared by diluting a wood preservative as claimed in claim 1 with water.

8. A method for protecting wood from fungi, wherein the wood is impregnated with an aqueous impregnating solution which has been prepared by diluting a wood preservative as claimed in claim 1 with water.

## Revendications

1. Agent de protection du bois à base d'une amine, caractérisé par le fait qu'il contient
a) une diméthylalkylamine, N-tridécyl-2,6-diméthylmorpholine, 4-(3-(para-tert-butyl-phényl)-2-méthyl-propyl)-2,6-cis-diméthylmorpholine ou leur mélange.
b) un composé d'amonium quaternaire, un sel d'amine grasse ou une amine éthoxylée et
c) un acide carboxylique aliphatique en C5-C20, le dioxyde de N-cyclohexyldiazonium, l'acide benzoïque ou un acide dicarboxylique ou leur sel.

2. Agent de protection du bois selon la revendication 1, caractérisé par le fait qu'il contient une diméthylalkylamine à 12 ou 14 atomes C dans le reste alkyle.

3. Agent de protection du bois selon la revendication 1, caractérisé par le fait qu'il contient comme émulsifiant, une alkylamine éthoxylée.

4. Agent de protection du bois selon la revendication 1, caractérisé par le fait qu'il contient, comme émulsifiant, une amine à l'huile de coco éthoxylée.

5. Agent de protection du bois selon la revendication 1, caractérisé par le fait qu'il contient, comme acide insoluble à l'eau, l'acide 2-éthyl-hexanoïque.

6. Procédé pour la protection du bois contre les champignons, caractérisé par le fait que l'on traite le bois avec un agent de protection du bois selon la revendication 1.

7. Solution d'imprégnation pour l'imprégnation du bois pour le protéger contre les champignons, préparée par dilution avec de l'eau d'un agent de protection du bois selon la revendication 1.

8. Procédé pour la protection du bois contre les champignons, caractérisé par le fait que l'on imprègne le bois avec une solution d'imprégnation aqueuse qui a été préparée par dilution avec de l'eau d'un agent de protection du bois selon la revendication 1.
